# EUROPEAN PATENT SPECIFICATION

(11) **EP 1 215 084 B1**
(45) Date of publication and mention of the grant of the patent: **24.08.2005**
(21) Application number: 01310101.9
(22) Date of filing: 03.12.2001
(51) Int. Cl.: B60R 13/02, B60J 5/04, B60J 10/00, B60R 13/08, E05B 65/20

(54) **Vehicle door trim panel comprising sealing means**
Kraftfahrzeugtürverkleidungsteil mit Dichtungsvorrichtung
Garniture de porte de véhicule comportant un dispositif d'étanchéité

(30) Priority: 14.12.2000 GB 0030527
(43) Date of publication of application: 19.06.2002
(73) Proprietor: ArvinMeritor Light Vehicle Systems-France, 45600 Sully sur Loire (FR)
(72) Inventor: Dobson, Simon, Sandgate, Kent CT20 3TA (GB)
(74) Representative: Jones, John Bryn

(56) References cited:
- WO-A-96/28314
- DE-A- 19 524 232
- US-A- 4 648 208
- US-A- 5 095 659
- US-A- 5 902 004
- US-A- 6 185 872

## Description

The present invention relates to vehicle doors, in particular to inside handles and sill buttons located on the trim panels of vehicle doors, where the inside handles and sill buttons are used to operate the vehicle door latch.

Known vehicle doors, are generally manufactured by welding an inner door panel to an outer door panel. This provides the structure of the vehicle door, with the upper section of the vehicle door comprising an aperture in which the window glass is housed, and the lower section of the vehicle door being used to house additional components such as door latches.

In addition, a trim panel is fixed to the inner door panel for aesthetic purposes. The trim panel is used to mount components such as an inside door release handle and a sill button. Consequently some form of mechanical connection is required between these components and the door latch, which requires various apertures to be created in the inner door panel.

It is notoriously difficult to form a perfect waterproof seal between the outer door panel and the window glass, and consequently water running down the window glass can penetrate this seal and enter the area between the inner door panel and the outer door panel. This is a problem since water can run through the apertures in the inner door panel and into the vehicle via the trim panel.

Hence, in known vehicle doors, some form of water management device, such as a plastic membrane is used as a barrier and thus defines a 'wet' area on its outboard side and a 'dry' area on its inboard side with the door trim being wholly on the dry side and the window glass being on the wet side. This barrier thus prevents water from entering the interior of the vehicle through the vehicle door. However, it can be difficult to assembly such plastics membranes due to their flexible nature and they can easily be displaced, allowing moisture to pass to the 'dry' side of the door.

US6185872 shows a door having an inner door panel with a large cut out that is completely covered by a support plate. The support plate has various holes through which cables pass with each cable being sealed by a grommet to the support plate. The support plate therefore defines a wet area on its outboard side and a dry area on its inboard side. The trim panel is fitted to the inboard side of the support plate and is therefore wholly on the dry side of the support plate.

DE19524232 shows another form of support plate. WO 96/2834-A shows the features of the preamble of claim 1.

An object of the present invention is to provide a vehicle door which includes an improved inside handle arrangement thus enabling the inside handle arrangement to be sealed relative to a trim panel.

Another object of the present invention is to provide a vehicle door which includes an improved sill button arrangement thus enabling the sill button arrangement to be sealed relative to a trim panel.

Thus, according to the present invention there is provided a vehicle door as defined in the accompanying claim 1.

The invention will now be described, by way of example only, with reference to the accompanying drawings in which:-
Figure 1 is a side view of a rear edge of a vehicle door according to the present invention,
Figure 2 is a cross section view of the inside door handle arrangement of Figure 1,
Figure 3 is a cross section view of an alternative inside door handle arrangement of Figure 1,
Figure 4 is a cross section view of an alternative inside door handle arrangement of Figure 1,
Figure 5 is a cross section view of an alternative inside door handle of arrangement Figure 1,
Figure 6 is a view of a rear edge of a further embodiment of a vehicle door according to the present invention,
Figure 7 is a view of a rear edge view of an inside sill button arrangement of Figure 6,
Figure 8 is a cross section view of an alternative inside sill button arrangement of Figure 6, and
Figure 9 is a cross section view of a further embodiment of a vehicle door according to the present invention.

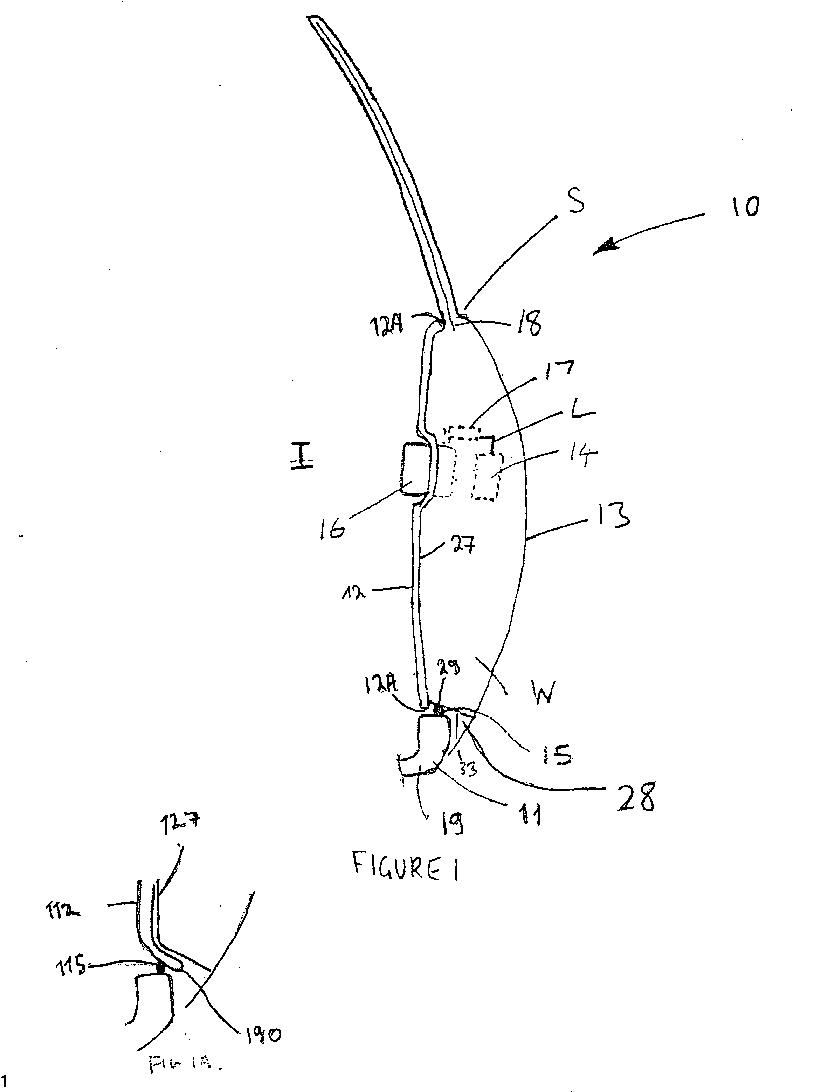

With reference to Figure 1 there is shown a vehicle door 10 including an inner door panel 27, a trim panel 12, a latch mechanism 14, a manually actuable element, in the form of an inside handle arrangement 16, an operating lever 17, a window glass 18, and a sill 11 of a vehicle 19 (only part of which is shown).

The operating lever 17 is connected at one end to the inside handle arrangement 16, and connected at the via a linkage L (shown schematically) to a latch mechanism 14.

The inner door panel 27 is a one piece pressing and includes a front facing surface (not shown), a rear facing surface (not shown), an upper facing surface (not shown), and a bottom facing surface 33.

The vehicle 19 includes a door aperture 28, in which the vehicle door 10 locates.

The door aperture 28 includes a door seal 29(only part of which is shown) which forms a seal between the vehicle door 10 and the door aperture 28. The door seal 29 acts to prevent water entering the vehicle between the door aperture 28 and the vehicle door 10.

The door seal 29 comprises four sections, a front edge seal (not shown) which seals between the front facing surface of the inner door panel 27 and the door aperture 28, a rear edge seal (not shown) which seals between the rear facing surface of the inner door panel 27 and the door aperture 28, an upper edge seal (not shown) which seals between the upper facing surface of the inner door panel 27 and the door aperture 28, and a lower edge seal 15 which seals between the bottom facing surface 33 of the door inner panel 27 and the door aperture 28.

The lower edge seal 15 is located on the sill 11.

A seal S is provided between the door outer skin 13 and the window glass 18, Whilst the seal keeps the majority of any rain water out, nevertheless some water can enter the interior of the door i.e. the wet space W. The trim panel 12 defines the barrier between the wet space W and the dry space in this case the interior I of a vehicle.

Note that the trim panel 12, has a periphery 12A which is sealed to the inner door panel 27 to prevent water from entering the area between the trim panel 12 and the inner door panel 27 from the wet space W. Consequently water cannot enter the interior I of the vehicle from the wet space W.

Alternatively (see Figure 1A) the trim panel 112 is not sealed to the inner door panel 127 and water can enter the area between the trim panel and the inner door panel from the wet space. Under these circumstances the periphery of the trim panel 190 is located outboard of the lower edge seal 115, and thus water between the trim panel and the door panel will exit the vehicle outboard of the lower edge seal and cannot enter the interior of the vehicle.

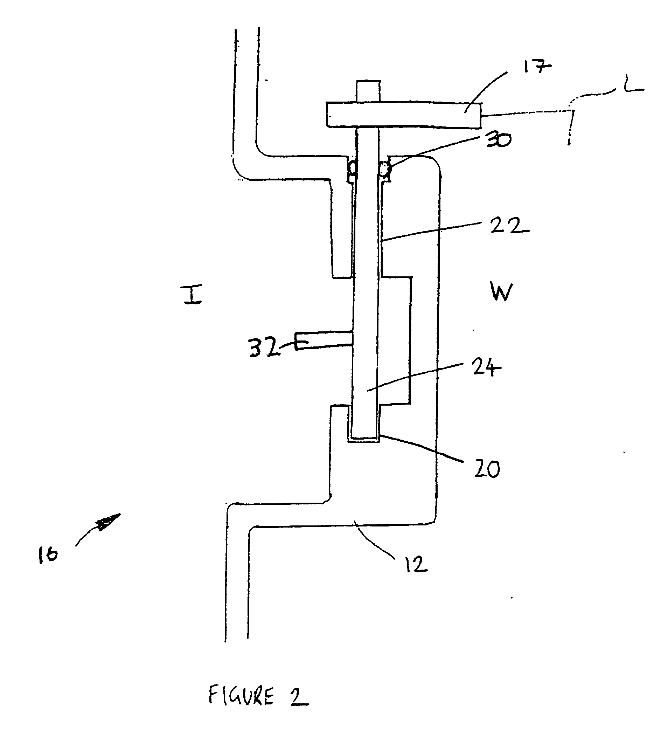

With reference to Figure 2, there is shown the inside handle arrangement 16 of Figure 1 and the trim panel 12. The trim panel 12 includes a blind hole 20 and a through hole 22. The inside handle arrangement 16 includes an inside handle 32 (shown schematically), and a vertical shaft 24.

The lower section of the vertical shaft 24 locates in the blind hole 20 of the trim panel 12. The upper section of the vertical shaft 24 passes through the through hole 22 of the trim panel 12. The vertical shaft 24 is free to rotate in the blind hole 20 and in the through hole 22.

The inside handle 32 is rotationally fixed to the vertical shaft 24, the vertical shaft 24 being rotationally fixed to an operating lever 17.

An o-ring 30 is located on the vertical shaft 24 in the area of the through hole 22 of the trim panel 12. The o-ring 30 provides a water tight seal between the trim panel and the vertical shaft 24 thus preventing water from entering the interior of the vehicle from the wet region via the vertical shaft 24.

Note in this embodiment that the only possible water entry point is via the vertical shaft 24 which transcends the wet space W and the interior I of the vehicle, i.e. where the vertical shaft 24 passes through the through hole 22 of trim panel 12. The position of the o-ring 30 thus locally defines the dry/wet barrier.

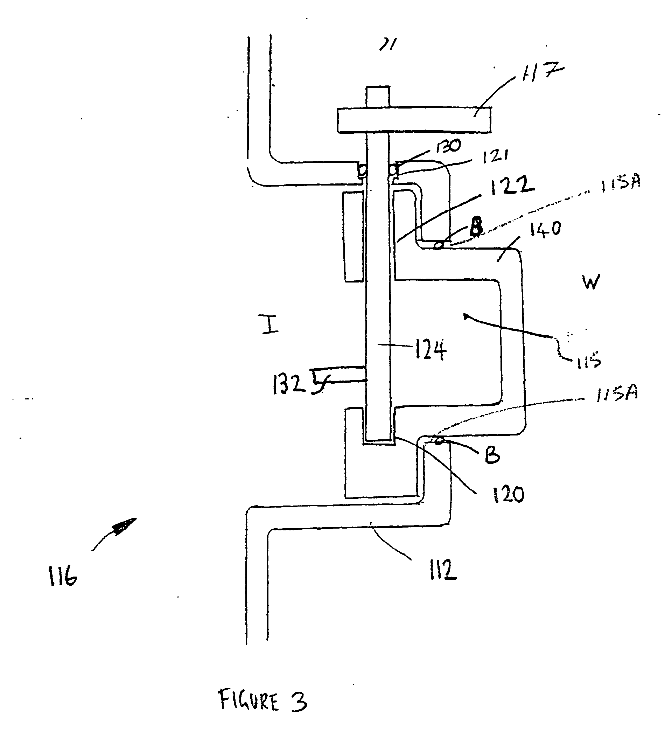

With reference to Figure 3, there is shown an alternative inside handle arrangement 116 of Figure 1 and trim panel 112. In this embodiment the trim panel 112 includes an aperture 115. The inside handle arrangement 116 includes a handle bezel 140, the handle bezel 140 locating inside the aperture 115 of the trim panel 112.

The handle bezel 140 includes a blind hole 120 and a through hole 122. The inside handle arrangement 116 includes an inside handle 132, and a vertical shaft 124.

The trim panel 112 also includes a through hole 121 which is aligned axially with the through hole 122 of the handle bezel 140.

The lower section of the vertical shaft 124 locates in the blind hole 120 of the handle bezel 140. The upper section of the vertical shaft 124 passes through the through hole 122 of the handle bezel 140 and the through hole 121 of the trim panel 112. The vertical shaft 124 is free to rotate in the blind hole 120 and in the through holes 121 and 122.

The inside handle 132 is rotationally fixed to the vertical shaft 124, the vertical shaft 124 being rotationally fixed to an operating lever 117.

Note that in this embodiment the features to locate the vertical shaft 124 i.e. the through hole and blind hole are situated in the handle bezel, as opposed to the previous embodiment where the features to locate the vertical shaft are integrated within the trim panel.

An o-ring 130 is located on the vertical shaft 124 in the area of the through hole 121 of the trim panel 112. The o-ring 130 provides a water tight seal between the trim panel 112 and the vertical shaft 124 thus preventing water from entering the interior of the vehicle via the vertical shaft 124.

However in this embodiment further sealing is required to prevent water entering the interior I of the vehicle. In the previous embodiment the only possible water entry point is where the vertical shaft 24 passes through the through hole 22 of trim panel 12. In this embodiment the aperture 115 in the trim panel 112 requires further sealing.

Sealing is required between the handle bezel 140 and the edge 115A of aperture 115 of trim panel 112 in this case a continuous bead B of sealant has been used. The vertical shaft 124 is sealed to the trim panel 112 through the use of the o-ring 130, and the handle bezel is sealed to the trim panel 112 through the use of the sealant. Thus water is prevented from entering the interior I of the vehicle via the vertical shaft 124 and via the aperture 115.

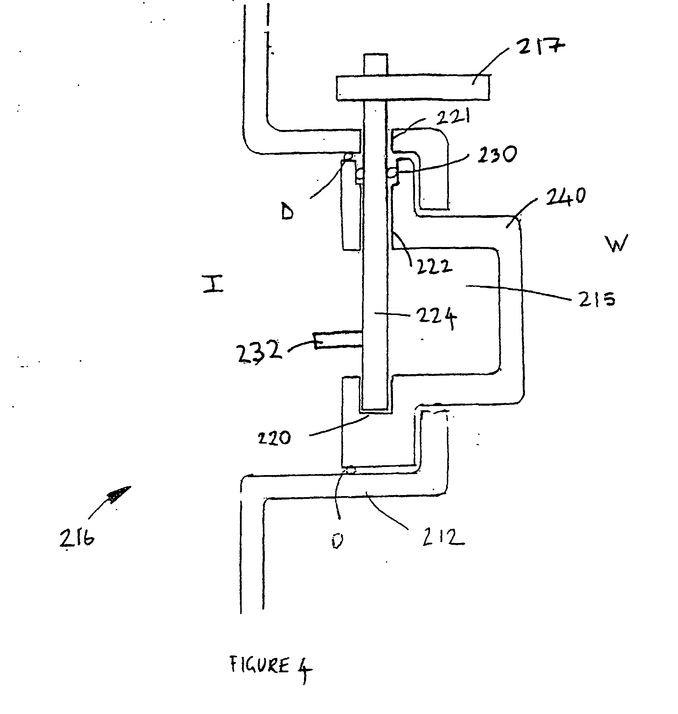

With reference to Figure 4, there is shown an alternative inside handle arrangement 216 of Figure 1 and a trim panel 212. Components perform the same function as handle arrangement 116 and are labelled 100 greater.

However in this embodiment the o-ring 230 is located on the vertical shaft 224 in the area of the through hole 222 of the handle bezel 240.

The o-ring 230 provides a water tight seal between the handle bezel 240 and the vertical shaft 224 thus preventing water from entering the interior of the vehicle via the vertical shaft 224.

As the o-ring 230 is located between the handle bezel 240 and the vertical shaft 224, there is no longer a seal between the trim panel 212 and the vertical shaft 224 as provided by the previous embodiment. Hence water can enter the interior I of the vehicle via the through hole 221 of the trim panel 212. A suitable sealant bead D is required to prevent water passing through the through hole 221 from entering the interior I of the vehicle.

Bead D also acts to prevent water entering via the aperture 215 in the trim panel 212. Note that in this embodiment, the positioning of bead D eliminates the need for an equivalent bead B as shown in Figure 3.

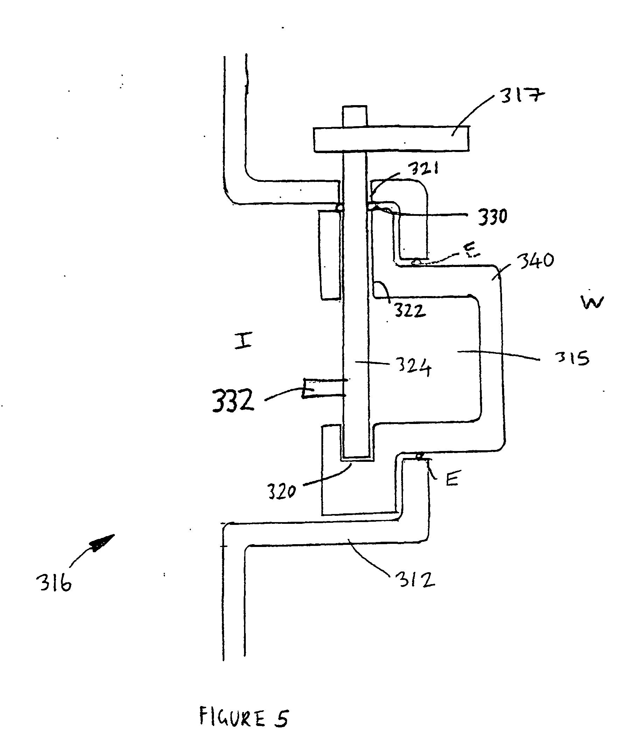

With reference to Figure 5, there is shown an alternative inside handle arrangement 316 of Figure 1 and a trim panel 312. Components perform the same function as handle arrangement 216 and are labelled 100 greater.

However in this embodiment the o-ring 330 is located on the vertical shaft 324 in the area between the through hole 322 of the handle bezel 240 and the through hole 321 of the trim panel 312.

Thus, the o-ring 330 provides a water tight seal between the vertical shaft 324 and the trim panel 312 and a water tight seal between the vertical shaft 324 and the handle bezel 340. In addition the o-ring 330 provides a water tight seal between the handle bezel 340 and the trim panel 312.

Bead E is only additional sealing required to seal the handle bezel 340 to the trim panel 312.

Apart from the fact that this embodiment requires the minimum additional sealant, the position of the o-ring between the handle bezel and the trim panel could be advantageous towards ease of assembly and potential replacement of the o-ring.

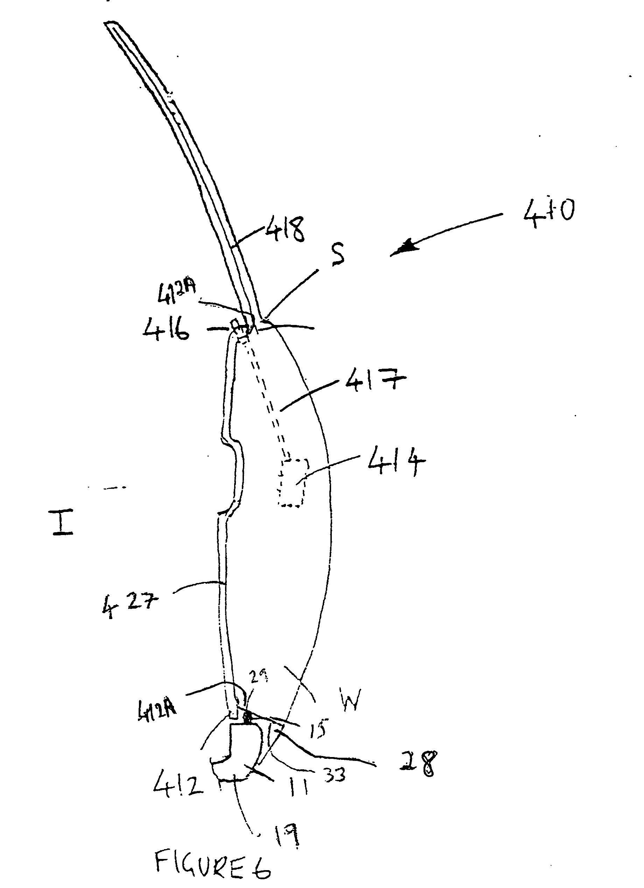

With reference to Figure 6 there is shown a vehicle door 410 including an inner door panel 427 a trim panel 412, a latch mechanism 414, a manually actuable element, in the form of a sill button arrangement 416, a window glass 418, and a sill 11 of a vehicle 19.

The sill 11. and the vehicle 19 have the same features as described in the embodiment of Figure 1.

Note that the trim panel 412, has a periphery 412A which is sealed to the inner door panel 427 to prevent water from entering the area between the trim panel 412 and the inner door panel 427 from the wet space W. Consequently water cannot enter the interior I of the vehicle from the wet space W.

Alternatively the trim panel is not sealed to the inner door panel and water can enter the area between the trim panel and the inner door panel from the wet space. Under these circumstances the periphery of the trim panel is located outboard of the lower edge seal, and thus water between the trim panel and the door panel will exit the vehicle outboard of the lower edge seal and cannot enter the interior of the vehicle.

The sill button arrangement includes an operating rod 417 which is connected at one end to the sill button 432, and connected at the opposite end to a latch mechanism 414.

The trim panel 412 defines the barrier between the wet space W and the dry space, in this case the interior I of a vehicle.

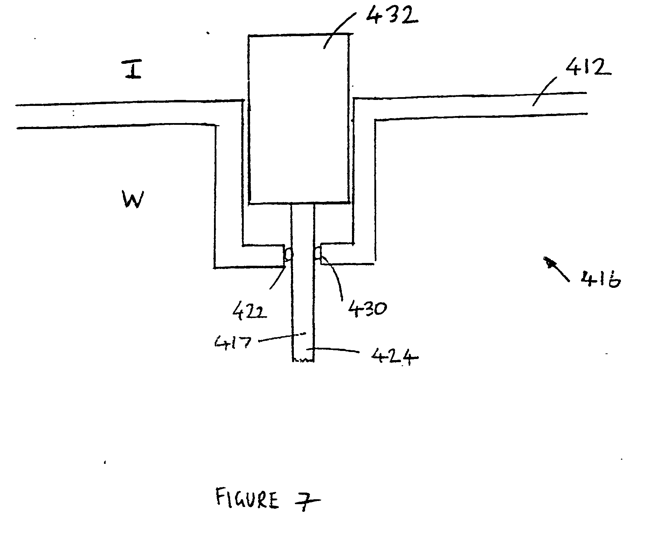

With reference to Figure 7, there is shown the sill button arrangement 416 of Figure 6 and the trim panel 412. The trim panel 412 includes a through hole 422. The sill button arrangement 416 includes a sill button 432, and operating rod 417. The operating rod 417 passes through the through hole 422 of the trim panel 412.

An o-ring 430 is located on the operating rod 417 in the area of the through hole 422 of the trim panel 412. The o-ring 430 provides a water tight seal between the trim panel and the operating rod 417 thus preventing water and moisture from entering the interior of the vehicle via the hole 422.

Note in this embodiment that the only possible water entry point is via the vertical shaft 424 which transcends the wet space W and the interior I of the vehicle, i.e. where the vertical shaft 424 passes through the through hole 422 of trim panel 412. The position of the o-ring 30 thus prevents water entering the interior I of the vehicle from the wet space W.

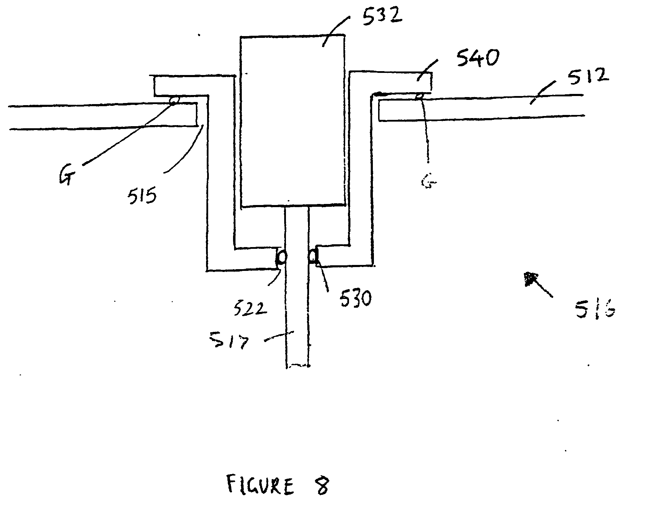

With reference to Figure 8, there is shown an alternative sill button arrangement 516 of Figure 6 and a trim panel 512. In this embodiment the trim panel 512 includes an aperture 515. The inside handle arrangement 516 includes a bezel 540, the bezel 540 locating inside the aperture 515 of the trim panel 512.

The bezel 540 includes a through hole 522. The sill button arrangement 516 includes an sill button 532, and an operating rod 517.

An o-ring 530 is located on the operating rod 517 in the area of the through hole 522 of the bezel 540. The o-ring 530 provides a water tight seal between the bezel 540 and the operating rod 517 thus preventing water from entering the interior of the vehicle via the operating rod 522.

However in this embodiment further sealing is required to prevent water entering the interior I of the vehicle. In the previous embodiment the only possible water entry point is where the vertical shaft 424 passes through the through hole 422 of trim panel 412. In this embodiment the aperture 515 in the trim panel 512 requires further sealing.

Scaling is required between the bezel 540 and the trim panel 512 and is provided in the form of o-ring G. The operating rod 517 is sealed to the trim panel 512 through the use of the o-ring 530, and the bezel 540 is sealed to the trim panel 512 through the use of o-ring G. Thus water is prevented from entering the interior I of the vehicle via the hole 522 and via the aperture 515.

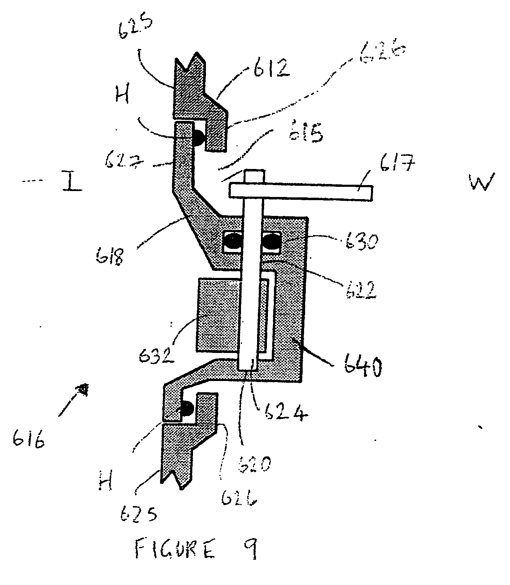

With reference to Figure 9, there is shown an alternative inside handle arrangement 616 and a trim panel 612.

The trim panel 612 includes an aperture 615. The trim panel has an inside surface 625.

The inside handle arrangement 616 includes a subassembly 618, the subassembly 618 being located in the aperture 615.

The subassembly 618 includes a handle bezel 640, a manually actuable element in the form of an inside handle 632, a vertical shaft 624, an o-ring 630 and an operating lever 617. The inside handle 632 is rotationally fixed to the vertical shaft 624, the vertical shaft 624 being rotationally fixed to the operating lever 617.

The handle bezel 640 has a bezel surface 627. The bezel surface 627 is substantially flush with the inside surface 625 of the trim panel 612. Note that in other embodiments the bezel surface could sit proud of the inside surface of the trim panel.

The handle bezel 640 includes a blind hole 620 and a through hole 622.

The lower section of the vertical shaft 624 locates in the blind hole 620 of the handle bezel 640. The upper section of the vertical shaft 624 passes through the through hole 622 of the handle bezel 640. The vertical shaft 624 is free to rotate in blind holes 620 and 622.

The handle bezel 640 includes an o-ring 630 located on the vertical shaft 624 in the area of the through hole 622, providing a water tight seal between the handle bezel 640 and the vertical shaft 624.

It can be seen that the vertical shaft 624 does not penetrate through the trim panel 612 and thus does not require sealing against the trim panel 612.

A suitable sealant bead H is applied between the subassembly 618 and the trim panel 612, thus preventing water from passing through aperture 615 and entering the interior I of the vehicle.

It can be seen in this embodiment that since the vertical shaft 624 does not penetrate through the trim panel 612 the subassembly 618 can be supplied and assembled into the trim panel 612 as a complete assembly.

The subassembly 618 is secured to the trim panel 612 by a suitable fixing means (not shown) such as a clip.

Alternatively the fixing means may be a screw which passes through the bezel 640 and into the trim panel 612. In this case the screw and the trim panel 612 would need to be sealed relative to each other since the screw would penetrate into the wet zone. It would be possible for the screw to engage in a blind hole of the trim panel 612 and thus eliminate the need for sealing between the screw and the trim panel 612.

It would also be possible to secure the subassembly 618 to the trim panel 612 by use of a suitable adhesive which could also act as a sealant.

It will also be appreciated that advantageously the subassembly 618 can be assembled independently, and this allows door manufacturers to buy in pre assembled subassemblies. The subassembly is then mounted on the trim panel with a suitable sealant applied between the subassembly and the trim panel.

In further embodiments the subassembly need not be mounted on the trim panel. The subassembly could be mounted on a portion of the door, such as an inner panel pressing or a window regulator frame carrier. With the subassembly mounted on said portion of the door, a suitable sealant is applied between the subassembly and the trim panel when the trim panel is fixed to the door.

Note that the o-rings 30, 130, 230, 330, 430, 530 and 630 can remain stationary relative to the trim panel/bezel (with the shaft/operating rod moving relative to them) or they could remain stationary relative to the shaft/operating rod (and hence move relative to the trim panel/bezel). In further embodiments alternative forms of seals could be used.

## Claims

1. A vehicle door (10) including a door outer skin (13) and an inner door panel (27) which together define a wet space (W) of the door, a manually actuable element (16), a latch mechanism (14), the latch mechanism being operated by the manually actuable element, and a trim panel (12) mounted adjacent to the inner door panel (27) on the vehicle interior side (I) thereof, the trim panel (12) defining a dry a dry space on the vehicle interior side (I), **characterised in that** sealing means (30) are provided to seal the manually operable element (16) relative to the trim panel to prevent moisture from passing from the wet space (W) to the vehicle interior side (I) of the trim panel.

2. A vehicle door according to Claim 1 in which the sealing means is provided by sealing the manually actuable element to the trim panel

3. A vehicle door according to Claim 1 or 2 in which the manually actuable element is located by a bezel (140, 240, 340, 540, 640), the bezel being secured to the trim panel.

4. A vehicle door according to Claim 3 in which the sealing means are provided by sealing (230, 330, 530, 630) the manually actuable element to the bezel, and sealing (D, 330, G, H) the bezel to the trim panel.

5. A vehicle door according to Claim 4 in which the manually actuable element, the bezel and a portion of the sealing means are provided as a subassembly, with the manually actuable element being sealed to the bezel by the portion of the sealing means

6. A vehicle door according to any preceding claim in which the manually actuable element is an inside door handle arrangement (16, 116, 216, 316, 616).

7. A vehicle door according to Claim 6 in which the inside door handle arrangement includes an inside door handle and a substantially vertical shaft.

8. A vehicle door according to Claim 7 in which the inside door handle is integral with the substantially vertical shaft.

9. A vehicle door according to Claim 7 or 8 which the substantially vertical shaft is connected to an operating lever, the operating lever operating the latch mechanism.

10. A vehicle door according to Claims 7 to 9 in which the substantially vertical shaft is sealed (30, 130, 330) relative to the trim panel.

11. A vehicle door according to Claims 7 to 11 when dependant on Claim 3 in which the substantially vertical shaft is sealed (230, 330, 630) relative to the bezel.

12. A vehicle door according to Claims 1 to 4 in which the manually actuable element is a sill button arrangement (416, 516).

13. A vehicle door according to Claim 12 in which the sill button arrangement includes a sill button and an operating rod.

14. A vehicle door according to Claim 13 in which the sill button is integral with the operating rod.

15. A vehicle door according to Claims 13 or 14 in which the operating rod is sealed (430) relative to the trim panel.

16. A vehicle door according to Claims 13 to 14 when dependant on Claim 3 in which the operating rod is sealed (530) relative to the bezel.

17. A vehicle door according to any preceding claim in which the sealing means includes an o-ring.

18. A vehicle door according to any preceding claim in which the periphery of the trim panel is sealed to said vehicle door.

19. A vehicle door as defined in any preceding claim further including a window glass (18) in which the door inner panel has an upper edge in the region of the window glass and a bottom facing surface (33) wherein the trim panel extends substantially from the upper edge to the bottom facing surface (33).

20. A vehicle including a door aperture having a lower edge seal (115) mounted thereon, and including a vehicle door as described in any preceding claim mounted in the door aperture, in which the periphery of the trim panel (190) is outboard of the lower edge seal (115) which is mounted on the door aperture.

## Patentansprüche

1. Fahrzeugtür (10) mit einer Türaußenhaut (13) und einem Türinnenpaneel (27), die zusammen einen Nassraum (W) der Tür bilden, einem handbetätigbaren Element (16), einem Schließmechanismus (14), wobei der Schließmechanismus durch das handbetätigbare Element betätigt wird, und einem angrenzend an das Türinnenpaneel (27) auf dessen Fahrzeuginnenseite (I) angebrachten Verkleidungspaneel (12), wobei das Verkleidungspaneel (12) einen Trockenraum auf der Fahrzeuginnenseite (I) bildet, **dadurch gekennzeichnet, dass** Dichtungsmittel (30) vorgesehen sind, um das handbetätigbare Element (16) gegenüber dem Verkleidungspaneel abzudichten, damit keine Feuchtigkeit von dem Nassraum (W) zur Fahrzeuginnenseite (I) des Verkleidungspaneels gelangen kann.

2. Fahrzeugtür nach Anspruch 1, bei der das Dichtungsmittel bereitgestellt wird durch Abdichten des handbetätigbaren Elements gegenüber dem Verkleidungspaneel.

3. Fahrzeugtür nach Anspruch 1 oder 2, bei der das handbetätigbare Element durch einen Zierring (140, 240, 340, 540, 640) fixiert wird, wobei der Zierring an dem Verkleidungspaneel befestigt ist.

4. Fahrzeugtür nach Anspruch 3, bei der die Dichtungsmittel bereitgestellt werden durch Abdichten (230, 330, 530, 630) des handbetätigbaren Elements gegenüber dem Zierring und durch Abdichten (D, 330, G, H) des Zierrings gegenüber dem Verkleidungspaneel.

5. Fahrzeugtür nach Anspruch 4, bei der das handbetätigbare Element, der Zierring und ein Abschnitt des Dichtungsmittels als Unterbaugruppe bereitgestellt werden, wobei das handbetätigbare Element durch den Abschnitt des Dichtungsmittels gegenüber dem Zierring abgedichtet wird.

6. Fahrzeugtür nach einem der vorhergehenden Ansprüche, bei der das handbetätigbare Element eine Türinnengriffvorrichtung (16, 116, 216, 316, 616) ist.

7. Fahrzeugtür nach Anspruch 6, bei der die Türinnengriffvorrichtung einen Türinnengriff und eine im Wesentlichen vertikale Welle umfasst.

8. Fahrzeugtür nach Anspruch 7, bei der der Türinnengriff mit der im Wesentlichen vertikalen Welle einstückig ausgebildet ist.

9. Fahrzeugtür nach Anspruch 7 oder 8, bei der die im Wesentlichen vertikale Welle mit einem Betätigungshebel verbunden ist, wobei der Betätigungshebel den Schließmechanismus betätigt.

10. Fahrzeugtür nach Anspruch 7 bis 9, bei der die im Wesentlichen vertikale Welle gegenüber dem Verkleidungspaneel abgedichtet ist (30, 130, 330).

11. Fahrzeugtür nach Anspruch 7 bis 10, wenn diese abhängen von Anspruch 3, wobei die im Wesentlichen vertikale Welle gegenüber dem Zierring abgedichtet ist (230, 330, 630).

12. Fahrzeugtür nach Anspruch 1 bis 4, bei der das handbetätigbare Element eine Türknopfanordnung (416, 516) ist.

13. Fahrzeugtür nach Anspruch 12, bei der die Türknopfanordnung einen Türknopf und eine Betätigungsstange umfasst.

14. Fahrzeugtür nach Anspruch 13, bei der der Türknopf mit der Betätigungsstange einstückig ausgebildet ist.

15. Fahrzeugtür nach Anspruch 13 oder 14, bei der die Betätigungsstange gegenüber der Verkleidungspaneel abgedichtet ist (430).

16. Fahrzeugtür nach Anspruch 13 bis 14, wenn diese abhängen von Anspruch 3, wobei die Betätigungsstange gegenüber dem Zierring abgedichtet ist (530).

17. Fahrzeugtür nach einem der vorhergehenden Ansprüche, bei der das Dichtungsmittel einen O-Ring umfasst.

18. Fahrzeugtür nach einem der vorhergehenden Ansprüche, bei der der Umfang des Verkleidungspaneels gegenüber der Fahrzeugtür abgedichtet ist.

19. Fahrzeugtür nach einem der vorhergehenden Ansprüche, die ferner eine Fensterscheibe (18) umfasst, bei der das Türinnenverkleidungspaneel einen oberen Rand im Bereich der Fensterscheibe und eine untere Verkleidungspaneelsfläche (33) aufweist, wobei sich das Verkleidungspaneel im Wesentlichen vom oberen Rand zu der unteren Verkleidungsfläche (33) erstreckt.

20. Fahrzeug mit einer Türöffnung mit einem daran angebrachten unteren Randschutz (115) und mit einer in der Türöffnung montierten Fahrzeugtür gemäß den vorhergehenden Ansprüchen, wobei der Umfang der Verkleidung (190) außerhalb des unteren Randschutzes (115) liegt, der an der Türöffnung angebracht ist.

## Revendications

1. Une portière de véhicule (10), comprenant une peau extérieure de portière (13) et un panneau intérieur de portière (27), définissant conjointement un espace humide (W) de la portière, un élément actionnable manuellement (16), un mécanisme de serrure (14), le mécanisme de serrure étant actionné par l'élément actionnable manuellement, et un panneau de garniture (12) monté adjacente au panneau intérieur de portière (27) sur le côté intérieur de véhicule (I) de celle-ci, le panneau de garniture (12) définissant un espace sec sur le côté intérieur de véhicule (I), **caractérisé en ce que** des moyens d'étanchéité (30) sont prévus pour isoler hermétiquement l'élément actionnable manuellement (16) par rapport au panneau de garniture, pour empêcher que de l'humidité ne pénètre, de l'espace humide (W) vers le côté intérieur du véhicule (I) du panneau de garniture.

2. Une portière de véhicule selon la revendication 1, dans laquelle les moyens d'étanchéité sont prévus en confinant hermétiquement l'élément actionnable manuellement sur le panneau de garniture.

3. Une portière de véhicule selon la revendication 1 ou 2, dans laquelle l'élément actionnable manuellement est positionné par un encadrement (140,240,340,540,640), l'encadrement étant fixé sur le panneau de garniture.

4. Une portière de véhicule selon la revendication 3, dans laquelle les moyens de confinement hermétique sont prévus en confinant hermétiquement (230,330,530,630) l'élément actionnable manuellement sur l'encadrement, et en confinant hermétiquement (D,330,G,H) l'encadrement sur le panneau de garniture.

5. Une portière de véhicule selon la revendication 4, dans laquelle l'élément actionnable manuellement, l'encadrement et une partie des moyens de confinement étanche sont fournis sous forme de sous-ensemble, l'élément actionnable manuellement étant confiné hermétiquement sur l'encadrement par la partie des moyens de confinement hermétique

6. Une portière de véhicule selon l'une quelconque des revendications précédentes, dans laquelle l'élément actionnable manuellement est un agencement de poignée intérieure de portière (16,116,216,316,616).

7. Une portière de véhicule selon la revendication 6, dans laquelle l'agencement de poignée intérieure de portière comprend une poignée intérieure de portière et un arbre sensiblement vertical.

8. Une portière de véhicule selon la revendication 7, dans laquelle la poignée intérieure de portière est réalisée d'une seule pièce avec l'arbre sensiblement vertical.

9. Une portière de véhicule selon la revendication 7 ou 8, dans laquelle l'arbre sensiblement vertical est relié à un levier d'actionnement, le levier d'actionnement actionnant le mécanisme de serrure.

10. Une portière de véhicule selon les revendications 7 à 9, dans laquelle l'arbre sensiblement vertical est confiné hermétiquement (30,130,330) par rapport au panneau de garniture.

11. Une portière de véhicule selon les revendications 7 à 10, dépendant de la revendication 3 dans laquelle l'arbre sensiblement vertical est isolé hermétiquement (230,330,630) par rapport à l'encadrement.

12. Une portière de véhicule selon les revendications 1 à 4, dans laquelle l'élément actionnable manuellement est un agencement de tirette de frise (416, 516).

13. Une portière de véhicule selon la revendication 12, dans laquelle l'agencement de tirette de frise comprend une tirette de frise et une tige d'actionnement.

14. Une portière de véhicule selon la revendication 13, dans laquelle la tirette de frise est réalisée d'une seule pièce avec la tige d'actionnement.

15. Une portière de véhicule selon la revendication 13 ou 14, dans laquelle la tige d'actionnement est isolée hermétiquement (430) par rapport au panneau de garniture.

16. Une portière de véhicule selon les revendications 13 à 14, dépendant de la revendication 3, dans laquelle la tige d'actionnement est isolée hermétiquement (530) par rapport à l'encadrement.

17. Une portière de véhicule selon l'une quelconque des revendications précédentes, dans laquelle les moyens d'étanchéité comprennent un joint torique.

18. Une portière de véhicule selon l'une quelconque des revendications précédentes, dans laquelle la périphérie du panneau de garniture est scellée à ladite portière de véhicule.

19. Une portière de véhicule telle que définie à l'une quelconque des revendications précédentes, comprenant en outre une vitre (18) dans laquelle le panneau intérieur de portière présente un bord supérieur, dans la région de la vitre, et une surface tournée vers le fond (33), dans laquelle le panneau de garniture s'étend sensiblement du bord supérieur à la surface tournée vers le bas (33).

20. Un véhicule comprenant une ouverture pour portière, ayant un joint d'étanchéité de bordure inférieure (115) monté sur lui et comprenant une portière de véhicule telle que décrite à l'une quelconque des revendications précédentes, montée dans l'ouverture pour portière, dans laquelle la périphérie du panneau de garniture (190) est extérieure au joint d'étanchéité de bord inférieur (115) monté sur l'ouverture de portière.
